(19) Europäisches Patentamt
European Patent Office
Office européen des brevets

(11) EP 4 450 538 A1

(12) **EUROPEAN PATENT APPLICATION**

(43) Date of publication:
**23.10.2024 Bulletin 2024/43**

(21) Application number: **23169115.5**

(22) Date of filing: **21.04.2023**

(51) International Patent Classification (IPC):
***C08J 5/18*** *(2006.01)* ***C08K 5/10*** *(2006.01)*
***C08L 23/16*** *(2006.01)* ***C08L 71/02*** *(2006.01)*
***B29C 48/10*** *(2019.01)*

(52) Cooperative Patent Classification (CPC):
(C-Sets available)
**C08J 5/18; B29C 48/10; C08K 5/10; C08L 23/14; C08L 71/02;** B29C 48/022; B29K 2023/12; C08J 2323/16; C08J 2453/00; C08J 2471/02; C08L 2203/16 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **NIEDERSÜß, Peter**
  **4021 Linz (AT)**
- **ORTNER, Stefan**
  **4021 Linz (AT)**

(74) Representative: **Maiwald GmbH**
**Elisenhof**
**Elisenstraße 3**
**80335 München (DE)**

# (54) BLOWN FILM

(57) The invention relates to a blown film comprising a polypropylene composition comprising an ethylene-propylene copolymer and a polyethylene-polyethylene glycol-block copolymer.

EP 4 450 538 A1

(52) Cooperative Patent Classification (CPC): (Cont.)

C-Sets
**C08L 23/14, C08L 53/00, C08K 3/34**

## Description

The present invention is directed to a blown film comprising a polypropylene composition comprising an ethylene-propylene copolymer and a polyethylene-polyethylene glycol block copolymer as well as to the use of said composition for the manufacture of a blown film.

Blown film extrusion is a technology that is the most common method to make plastic films, especially for the packaging industry. The process involves extruding a tube of molten polymer, typically of polyethylene or polypropylene, through a die and inflating the same to several times its initial diameter to form a thin film bubble, which solidifies by cooling and crystallization. This bubble is then collapsed and used as a lay-flat film or can be made into bags. In principle two major processes are known, which basically differ in the kind of cooling of the film bubble. The more common process uses air cooling, and the more complex one water cooling.

One difficulty which occurs in the blown film process is melt fracture reducing the performance and limiting the application. To overcome this problem, typically processing aids based on fluoropolymers (e.g. Dynamar from 3M) are used. For long time being, this type of solution worked perfectly and cost efficiently. However, recently it was recognized that such processing aids cause healthy, safety and environmental problems in the production of blown films, due to the fluorine compounds, which accumulate in the produced films. Moreover, such processing aids have long lasting effects in extruders and risks the following production with cross contamination.

Consequently, efforts have been made to substitute these fluoropolymer processing aids. US20050070644A1 discloses extrudable compositions for the manufacture of thermoplastic films comprising a thermoplastic polyethylene and polyethylene glycol. EP3234004B1 discloses thermoplastic compositions comprising polyethylene and a polymer processing additive composition comprising a polyethylene glycol and a metal salt of a carboxylic acid, sulfonic acid, or alkylsulfate.

However, there is still the desire to find other processing aids which can replace the fluoropolymers used in the production of blown films based on polypropylene, as the knowledge gained for polyethylenes cannot be transferred to polypropylenes in a straightforward manner.

Especially processing aids are desired which can be used for the production of blown films based on polypropylenes obtained by the use of metallocene catalyst.

## Summary of invention

The present invention is directed to a blown film comprising a polypropylene composition comprising

a) at least 98.0 wt.-% of an ethylene-propylene copolymer, based on the total weight of the polypropylene composition, and

b) 0.01 to 1.0 wt.-% of a polymer processing aid, based on the total weight of the polypropylene composition, wherein said polymer processing aid is a polyethylene-polyethylene glycol block copolymer (PE-EO) represented by the following chemical formula $C_nH_{2n+z}$, $(OCH_2CH_2)_yOH$, wherein n is on average ≥ 5, preferably n is on average from 5 to 100, more preferably on average from 10 to 50, z is from -3 to 1, preferably is 1, y is on average ≥ 25, preferably y is on average from 25 to 500, more preferably is on average from 50 to 250,

wherein the ethylene-propylene copolymer has

i) an ethylene content, measured by $^{13}$C-NMR, in the range of 0.5 to 7.0 wt.-%,

ii) 2,1 erythro regio-defects, measured by $^{13}$C NMR, in the range of > 0.10 to 1.00 mol-%, and

iii) a $MFR_2$ (230°C; 2.16 kg), measured according to ISO 1133, in the range of 0.1 to 5.0 g/lOmin.

Preferred embodiments of the polypropylene composition from which the blown film is produced are defined in the claims dependent on claim 1.

Additionally the invention is directed to the use of a polypropylene composition as described herein for the manufacture of a film as well as to a process of a blown film using the polypropylene composition according to this invention.

In the following the invention is defined in more detail.

## Detailed description of the invention

### *Blown Film*

Blown films are known to the skilled person. As stated above blown films are obtained by extrusion technology

in which a tube of the molten polypropylene composition according to this invention is extruded through a die and inflated to several times its initial diameter to form a thin film bubble. This bubble is then collapsed obtaining a film. Said film can be for instance used as a lay-flat film or can be converted into bags. In the present case air cooling of the film bubble is preferred. Regarding the manufacture of blown films from polypropylene reference is made inter alia to the "Polypropylene Handbook" of "Nello Pasquini, 2nd edition (pages 412 to 414).

As mentioned above the invention is also directed to the use of the polypropylene composition according to this invention for the manufacture of blown films using process conditions well known in the art. Additionally the invention is directed to a process for obtaining a blown film according to this invention comprising the following steps

I. providing a polypropylene composition as defined herein,
II. melting the polypropylene composition,
III. inflating the molten polypropylene composition into a thin film bubble,
IV. air cooling the thin film bubble,
V. collapsing the thin film bubble, thereby obtaining a blown film.

***The polypropylene composition***

The blown film is made from, i.e. comprises, a polypropylene composition. The blown film according to the present invention comprises the polypropylene composition as the by far major component. Accordingly, it is preferred, that the blown film is comprised of at least 95 wt.-% of the polypropylene composition, based on the total weight of the blown film. More preferably, the blown film consists of the polypropylene composition. The polypropylene composition according to the present invention is defined in the following.

First the individual components of the polypropylene composition are described and subsequently the polypropylene composition as such.

***The ethylene-propylene copolymer***

The by far major part of the polypropylene composition is an ethylene-propylene copolymer, i.e. at least 98.0 wt.-%, more preferably at least 99.0 wt.-%, of the polypropylene composition is the ethylene-propylene copolymer.

The term "ethylene-propylene copolymer" indicates that said copolymer consists only of units derived from ethylene and propylene, wherein the propylene units make up the major part of the ethylene-propylene copolymer. Accordingly, the ethylene content of the ethylene-propylene copolymer is in the range of 0.5 to 7.0 wt.-%, preferably in the range of 0.7 to 4.0 wt.-%, more preferably in the range of 0.8 to 2.7 wt.-%, yet more preferably in the range of 0.9 to 2.3 wt.-%, measured by $^{13}$C-NMR.

Further the ethylene-propylene copolymer according to this invention must be produced with a metallocene catalyst, which is reflected by the presence of 2,1 erythro regio-defects in the polymer chain. Further information regarding the polymerization conditions is provided in detail below. Accordingly, the ethylene-propylene copolymer according to this invention has 2,1 erythro regio-defects, measured by $^{13}$C NMR, in the range of > 0.10 to 1.00 mol-%, more preferably in the range of 0.35 to 0.85 mol-%, yet more preferably in the range of 0.45 to 0.75 mol-%.

A further characteristic of the ethylene-propylene copolymer, due to its manufacture with a metallocene catalyst, is its rather low amounts of xylene cold solubles. Thus, it is preferred that the ethylene-propylene copolymer has a xylene cold soluble (XCS) fraction, determined at 25 °C according to ISO 16152, in the range of 0.1 to 5.0 wt.-%, more preferably in the range of 0.2 to 3.0 wt.-%, yet more preferably in the range of 0.3 to 1.0 wt.-%.

The term "ethylene-propylene copolymer" shall further indicated that the copolymer is not a heterophasic system. Accordingly the ethylene-propylene copolymer according to this invention is monophasic as well understood by the skilled person. In other words, the ethylene-propylene copolymer does not comprise polymer components, which are not miscible with each other, as this is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and are not part of the present invention. The presence of second polymer phases or the so-called inclusions is for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

Further it is preferred that the the ethylene-propylene copolymer has a molecular weight distribution (MWD), defined as the ratio between the weight average molar mass (Mw) and the number average molar mass (Mn) and determined by Gel Permeation Chromatography (GPC) in the range of 2.0 to 5.0, more preferably in the range of 2.1 to 4.5, still more preferably in the range of 2.2 to 3.5.

Additionally the molecular weight of the ethylene-propylene copolymer must be high enough that a blown film can be produced from the polypropylene composition in which the ethylene-propylene copolymer is the major component. Hence it is preferred that the ethylene-propylene copolymer has a melt flow rate $MFR_2$ (230 °C; 2.16 kg), measured according to ISO 1133, in the range of 0.1 to 5.0 g/10min, more preferably in the range of 0.5 to 4.0 g/10min, still more preferably in the range of 0.8 to 3.2 g/10 min.

In a preferred embodiment, the ethylene-propylene copolymer comprises two ethylene-propylene copolymer fractions. That is, the ethylene-propylene copolymer comprises, preferably consists of,

(a) a first ethylene-propylene copolymer fraction (F1) having an ethylene content, measured by $^{13}$C-NMR, is in the range of 0.2 to 1.0 wt.-%, preferably in the range of 0.2 to 0.9 wt.-%, measured by $^{13}$C-NMR, and
(b) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene copolymer fraction (F1) is lower than in the second ethylene-propylene copolymer fraction (F2),
- the weight ratio between the first ethylene-propylene copolymer fraction (F1) and the second ethylene-propylene copolymer fraction (F2) [(F1)/(F2)] is in the range of 70/30 to 50/50, preferably in the range of 65/35 to 55/45, and
- the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F 1) and the second ethylene-propylene copolymer fraction (F2).

Accordingly it is preferred that the ethylene-propylene copolymer complies with the equation (1), preferably with the equation (1a)

$$\frac{C2\ (PPC)}{(C2\ (F1)\ x\ [(F1)/(PPC)])} > 3.00 \quad (1)$$

$$10.00 > \frac{C2\ (PPC)}{(C2\ (F1)\ x\ [(F1)/(PPC)])} > 3.00 \qquad (1a)$$

wherein

"C2 (PPC)" is the ethylene content [wt.-%], measured by $^{13}$C NMR, of the ethylene-propylene copolymer;
"C (F1)" is the ethylene content [wt.-%], measured by $^{13}$C NMR, of the first ethylene-propylene copolymer fraction (F 1);
"(F1)/(PPC)" is the amount of the first ethylene-propylene copolymer fraction (F 1) in the ethylene-propylene copolymer divided by the amount of the ethylene-propylene copolymer.

Accordingly it is further preferred that the ethylene content between the first ethylene-propylene copolymer fraction (F 1) and the second ethylene-propylene copolymer fraction (F2) differs in the range of 2.0 to 6.0 wt.-%, more preferably in the range of 2.0 to 5.0 wt.-%.

Therefore it is preferred that the ethylene content of the second ethylene-propylene copolymer fraction (F2) is in the range of 2.0 to 7.0 wt.-%, more preferably in the range of 2.2 to 6.0 wt.-%, still more preferably in the range of 2.5 to 5.0 wt.-%.

Catalyst

As mentioned above the ethylene-propylene copolymer according to this invention must be produced with a metallocene catalyst.

Preferably, the ethylene-propylene copolymer is produced in a sequential polymerization process using a specific metallocene catalyst. Accordingly, the ethylene-propylene copolymer can be produced with a metallocene catalyst as disclosed in WO 2019/179959, which is incorporated by reference herewith.

A specifically preferred metallocene catalyst complex is rac-anti-dimethylsilanediyl[2-methyl-4,8-bis-(3',5'-dimethylphenyl)-1,5,6,7-tetrahydro-s-indacen-1-yl] [2-methyl-4-(3 ', 5' -dimethylphenyl)-5 -methoxy-6-tert-butylinden-1 -yl] zirconium dichloride (MC-2).

The preferred cocatalysts are also disclosed in WO 2019/179959.

Catalyst Manufacture

Regarding catalyst manufacture, reference is also made to WO 2019/179959.

The most preferred catalyst system is defined in the example section below (single site catalyst system 1 (SSCS1)).

The polymerization conditions in the sequential polymerization of the ethylene-propylene copolymer are nothing specific and well known to the skilled person. Typically the first ethylene-propylene copolymer fraction (F1) is produced in a slurry reactor and the second ethylene-propylene copolymer fraction (F2) is produced in a gas phase reactor in the presence of the first ethylene-propylene copolymer fraction (F1). Regarding such multistage processes a preferred process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479, WO 00/68315, WO2015/082379 or in WO2015/011134.

It is well known that prior to the main polymerization a prepolymerization may take place.

Regarding the prepolymerization, reference is made to WO2015/011134.

In case a prepolymerization step is performed, all of the catalyst mixture is introduced to the prepolymerization step.

As mentioned above the first ethylene-propylene copolymer fraction (F1) is preferably produced in a slurry phase polymerization step, i.e. in the liquid phase.

The temperature in the slurry polymerization is typically from 50 to 110 °C, preferably from 60 to 100 °C and in particular from 65 to 95 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The slurry polymerization stage is followed by the gas phase polymerization stage in which the second ethylene-propylene copolymer fraction (F2) is produced. It is preferred to conduct the slurry directly into the gas phase polymerization zone without a flash step between the stages. This kind of direct feed is described in EP-A-887379, EP-A-887380, EP-A-887381 and EP-A-991684.

That is, the reaction product of the slurry phase polymerization, i.e. the first ethylene-propylene copolymer fraction (F1), which preferably is carried out in a loop reactor, is then transferred to the subsequent gas phase reactor in which the second ethylene-propylene copolymer fraction (F2) is produced.

The polymerization in gas phase may be conducted in fluidized bed reactors, in fast fluidized bed reactors or in settled bed reactors or in any combination of these. When a combination of reactors is used then the polymer is transferred from one polymerization reactor to another. However, it is preferred that the second ethylene-propylene copolymer fraction (F2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar.

According to this invention, the first ethylene-propylene copolymer fraction (F1) is produced in the first step, i.e. in a first reactor, e.g. the loop reactor, whereas the second ethylene-propylene copolymer fraction (F2) is produced in the subsequent step, i.e. in the second reactor, e.g. the gas phase reactor. In case the polymerization process of the first ethylene-propylene copolymer fraction (F1) and the second ethylene-propylene copolymer fraction (F2) contains also a prepolymerization step, then the first ethylene-propylene copolymer fraction (F1) according to this invention is the polymer produced in the prepolymerization together with the polymer produced in the subsequent first step, in the first reactor, e.g. the loop reactor, whereas the second ethylene-propylene copolymer fraction (F2) is the product of the second reactor, e.g. the gas phase reactor. The amount of polymer produced in the prepolymerization step is comparatively small compared to the quantities produced in the first reactor and therefore has no great influence on the properties of the ethylene-propylene copolymer from the first reactor.

The preferred properties of the first ethylene-propylene copolymer fraction (F1) and the second ethylene-propylene copolymer fraction (F2) have been mentioned above.

*The polymer processing aid*

Polymer processing aids are used to eliminate or at least to reduce melt fracture, to increase gloss and to reduce surface defects improving surface smoothness. Typically fluoropolymers are the first choice as polymer processing aid. However, in the present invention it has been found that a polyethylene-polyethylene glycol block copolymer (PE-EO) represented by the following chemical formula $C_nH_{2n+z}(OCH_2CH_2)_yOH$ can be an excellent alternative to the commonly used fluoropolymers, for the manufacture of blown films based on the ethylene-propylene copolymer according to this invention.

In this invention, the amount of polymer processing aid is in the range of 0.01 to 1.0 wt.-%, preferably 0.05 to 0.8 wt.-%, based on the total weight of the polypropylene composition.

Polyethylene-polyethylene glycol block copolymer (PE-EO) are known in the art. The polyethylene-polyethylene glycol block copolymer (PE-EO) represented by the chemical formula $C_nH_{2n+z}(OCH_2CH_2)_yOH$ that is suitable for the blown film of the present invention has to comply with the following, specific ranges for n, z and y.

The length of the polyethylene block of the PE-EO block copolymer is defined by n. According to the invention, n is on average ≥ 5, preferably n is on average from 5 to 100, more preferably on average from 10 to 50.

The polyethylene block comprises multiple ethylene units, however, carbon carbon double bonds can be present in the polyethylene block of the PE-EO block copolymer. The number of double bonds is given by z, wherein z is from -3 to 1. For z = -3, two double bonds are present in the polyethylene block, for z=-1, one double bond and for z=1, the polyethylene consists solely of ethylene units. It is preferred that z = 1 and the polyethylene block consists solely of ethylene units.

The length of the polyethylene glycol block has an influence on its applicability to reduce melt fracture in blown films. It was found, that the polyethylene glycol block has to have at least 25 ethylene glycol units. Accordingly, y is on average ≥ 25, preferably y is on average from 25 to 500, more preferably y is on average from 50 to 250.

The number average molar mass (Mn) of the polyethylene-polyethylene glycol block copolymer is preferably in the range of 2,000 to 25,000 g/mol, more preferably 3,000 to 20,000 g/mol.

The polyethylene-polyethylene glycol block copolymers according to this invention are commercially available. Their preparation is known by the skilled person. For instance, the preparation of a polyethylene-polyethylene glycol block copolymer is described by J. Milton Harris et al in "Purification of biomaterials by phase-partitioning with poly(ethylene glycol)-alkyl ether", Ind. Eng. Chem. Prod. Res. Dev. 1984, 23, 1, 86-88 or by M. H. M. Ahmed et al in "Preparation and characterization of some new surfactant derived from phenol", Olaj, Szappan, Kozmetika 2011, 60(1), 17-22.

Since the polyethylene-polyethylene glycol block copolymers, as described above, have been found to be excellent alternatives to fluoropolymer processing aids, the propylene composition of the present invention preferably does not contain fluoropolymers.

Even more preferably the polyethylene-polyethylene glycol block copolymer is the sole polymer processing aid in the polypropylene composition.

***The alpha-nucleating agent***

The polypropylene composition according to this invention may be further alpha-nucleated. In a preferred embodiment of the present invention, the polypropylene composition comprises additionally an alpha-nucleating agent which is present in the range of 0.0001 to 1.0 wt.-%, more preferably in the range of 0.0003 to 0.8 wt.-%, yet more preferably in the range of 0.0005 to 0.5 wt.-%, based on the total weight of the composition.

Preferred examples of the alpha-nucleating agents are disclosed in "Plastics Additives Handbook", Hans Zweifel, 6th Edition, p. 967 - 990.

Among all alpha-nucleating agents, 1,2-cyclohexane-dicarboxylic acid, calcium salt as for instance used in Hyperform familiy of Milliken (e.g. HPN-20E), hydroxy-bis[2,4,8,10-tetrakis(1,1-dimethylethyl)-6-hydroxy-12H-dibenzo-[d,g]-dioxaphoshocin-6-oxidato] aluminium as used in the nucleating agents ADK NA-21, NA-21 E, NA-21 F, etc., metal salts of 2,2'-methylene bis(4,6-di-tert-butylphenyl)phosphat, like sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], 2,2'- methylene bis-(2,6-di-tert. butylphenyl) phosphate lithium salt (as used in ADK STAB NA-71), sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4- ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzenetrisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein metal salts of 2,2'-methylene bis(4,6-di-tert-butylphenyl)phosphat, like 2,2'-methylene bis-(2,6-di-tert. butylphenyl) phosphate lithium salt (e.g. NA-71), 1,2-cyclohexane-dicarboxylic acid, calcium salt (e.g. HPN-20E), hydroxy-bis[2,4,8,10-tetrakis(1,1-dimethylethyl)-6-hydroxy-12H-dibenzo-[d,g]-dioxa-phoshocin-6-oxidato] aluminium( e.g. NA-21), and polymeric nucleating agents

selected from the group consisting of vinylcycloalkane polymers and vinylalkane polymers are particularly preferred.

Preferably, the polymer composition contains at least one alpha-nucleating agent selected from the group consisting of metal salt of 2,2'-methylene bis(4,6-di-tert-butylphenyl)phosphat, hydroxy-bis[2,4,8,10-tetrakis(1,1-dimethylethyl)-6-hydroxy-12H-dibenzo-[d,g]-dioxa-phoshocin-6-oxidato] aluminium (e.g. NA-21), polymeric nucleating agent 1,2-cyclohexane-dicarboxylic acid, calcium salt (HPN-20E). Still more preferably the alpha-nucleating agent(s) is/are selected from the group consisting of 2,2'- methylene bis-(2,6-di-tert. butylphenyl) phosphate lithium salt (e.g. NA-71), bicyclo (2.2.1) heptane-2,3-dicarboxylic acid, di-sodium salt (e.g. HPN-E20) and poly vinylcyclohexane (p-VCH). Yet more preferably, the alpha-nucleating agent(s) present in the polymer composition is/are selected from the group consisting of 2,2'- methylene bis-(2,6-di-tert. butylphenyl) phosphate lithium salt (e.g. NA-71), hydroxy-bis[2,4,8,10-tetrakis(1,1-dimethylethyl)-6-hydroxy-12H-dibenzo-[d,g]-dioxa-phoshocin-6-oxidato] aluminium (like NA-21), 1,2-cyclohexane-dicarboxylic acid, calcium salt (HPN-20E) and poly vinylcyclohexane (p-VCH).

Thus, it is especially preferred that the alpha-nucleating agent(s) present in the polypropylene composition is/are selected from the group consisting of hydroxy-bis[2,4,8,10-tetrakis(1,1-dimethylethyl)-6-hydroxy-12H-dibenzo-[d,g]-dioxaphoshocin-6-oxidato] aluminium (e.g. NA-21), poly vinylcyclohexane (p-VCH), 2,2'- methylene bis-(2,6-di-tert. butylphenyl) phosphate lithium salt (e.g. NA-71) and 1,2-cyclohexane-dicarboxylic acid, calcium salt (HPN-20E), wherein further the total amount of the alpha-nucleating agent(s), based on the total weight of the polypropylene composition, is preferably in the range of 0.0005 to 0.5 wt.-%.

### *Further components*

As stated above the polypropylene composition must comprise the ethylene-propylene copolymer as main component and a polymer processing aid. Additionally the polypropylene composition may comprise an alpha-nucleating agent as mentioned above and typical additives other than the alpha-nucleating agent, like antioxidants, antistatic agents and antifogging agents. Accordingly, the term "additive(s)" according to this invention does not cover alpha-nucleating agents and polymer processing aids. Such additives may be premixed with a carrier material, which is typically a polypropylene. According to this invention such carrier material, e.g. such additional polypropylene, is considered as being part of the additives.

Typically, the total amount of additives, which also includes the amount of carrier material, based on the polypropylene composition, shall not exceed 1.0 wt.-%, preferably is in the range of 0.05 to 1.0 wt.-%.

Accordingly, the polypropylene composition according to this invention comprises, preferably consists of

(a) at least 98.0 wt.-%, more preferably at least 99.0 wt.-%, based on the total weight of the composition, of the ethylene-propylene copolymer,

(b) 0.01 to 1.0 wt.-%, more preferably 0.05 to 0.8 wt.-%, based on the total weight of the polypropylene composition, of a polymer processing aid, wherein said polymer processing aid is a polyethylene-polyethylene glycol block copolymer (PE-EO) represented by the following chemical formula $C_nH_{2n+z}(OCH_2CH_2)_yOH$, wherein n is on average $\geq 5$, preferably n is on average from 5 to 100, more preferably on average from 10 to 50, z is from -3 to 1, preferably is 1, y is on average $\geq 25$, preferably y is on average from 25 to 500, more preferably is on average from 50 to 250,

(c) 0.0001 to 1.0 wt.-%, more preferably 0.0005 to 0.5 wt.-%, based on the total weight of the polypropylene composition, of an alpha-nucleating agent, said alpha-nucleating agent being preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and 1,2-cyclohexane-dicarboxylic acid, calcium salt, and mixtures thereof, and

(d) 0.05 to 1.0 wt.-%, based on the total weight of the polypropylene composition, of additives,

wherein the combined amount of (b), (c) and (d), based on the total weight of the composition, does not exceed 2.0 wt.-%, preferably does not exceed 1.0 wt.-%.

### *Properties of the polypropylene composition*

The polypropylene composition according to this invention has been tailored to be suited for the manufacture of blown films. Hence, the polypropylene composition according to this invention preferably has a melt flow rate $MFR_2$ (230 °C; 2.16 kg), measured according to ISO 1133, in the range of 0.1 to 5 g/10min, more preferably in the range of 0.5 to 4.0 g/10min, still more preferably in the range of 0.8 to 3.5 g/10 min.

The polypropylene composition according to this invention can be defined further by its melting behavior.

Preferably, the propylene composition has a melting temperature Tm in the range of 120 to 162 °C.

Further, it is preferred that the polypropylene composition according to this invention has at least one melting peak temperature ($T_{p,m}$) in the range of 120 to 162 °C, more preferably in the range of 132 to 155 °C.

The present polypropylene composition is especially characterized by the presence of at least two melting peak temperatures, whereby one melting peak temperature ($T_{p1,m}$) is in the range of 145 to 155 °C, more preferably in the range of 147 to 153 °C and another melting peak temperature ($T_{p2,m}$) is in the range of 132 to 142 °C, more preferably in the range of 134 to 140 °C.

***Properties of the blown film***

The polymer processing aid, as described above, in combination with the ethylene propylene copolymer, as described above, lead to good, optical properties of the respective blown film.
Accordingly, it is preferred that the film has a haze, as determined according to ASTM D 1003-00, of ≤ 8%, more preferably ≤ 7%, yet more preferably in the range of 0.1% to 6.0 %.
Further, the clarity of the blown film, as determined according to ASTM D1003:21 is preferably ≥ 80%, more preferably ≥ 85%, yet more preferably in the range of 85% to 99%.
Any combination of preferred features and embodiments, as described herein, is within the disclosure of this invention.

***Preferred embodiments***

In the following some especially preferred embodiments of the invention are listed.
Accordingly, the present invention is directed to a blown film consisting of a polypropylene composition comprising

a) at least 98.0 wt.-% of an ethylene-propylene copolymer, based on the total weight of the polypropylene composition, and
b) 0.01 to 1.0 wt.-% of a polymer processing aid, based on the total weight of the polypropylene composition, wherein said polymer processing aid is a polyethylene-polyethylene glycol block copolymer (PE-EO) represented by the following chemical formula $C_nH_{2n+z}(OCH_2CH_2)_yOH$, wherein n is on average ≥ 5, preferably n is on average from 5 to 100, more preferably on average from 10 to 50, z is from -3 to 1, preferably is 1, y is on average ≥ 25, preferably y is on average from 25 to 500, more preferably is on average from 50 to 250,

wherein the ethylene-propylene copolymer has

i) an ethylene content, measured by $^{13}$C-NMR, in the range of 0.5 to 7.0 wt.-%,
ii) 2,1 erythro regio-defects, measured by $^{13}$C NMR, in the range of > 0.10 to 1.00 mol-%, and
iii) a $MFR_2$ (230°C; 2.16 kg), measured according to ISO 1133, in the range of 0.1 to 5.0 g/lOmin.

The present invention is in particular directed to a blown film consisting of a polypropylene composition, said polypropylene composition comprising

(a) at least 98.0 wt.-%, more preferably at least 99.0 wt.-%, based on the total weight of the composition, of an ethylene-propylene copolymer,
(b) 0.01 to 1.0 wt.-%, more preferably 0.05 to 0.8 wt.-%, based on the total weight of the polypropylene composition, of a polymer processing aid, wherein said polymer processing aid is a polyethylene-polyethylene glycol block copolymer (PE-EO) represented by the following chemical formula $C_nH_{2n+z}(OCH_2CH_2)_yOH$, wherein n is on average ≥ 5, preferably n is on average from 5 to 100, more preferably on average from 10 to 50, z is from -3 to 1, preferably is 1, y is on average ≥ 25, preferably y is on average from 25 to 500, more preferably is on average from 50 to 250,
(c) 0.0001 to 1.0 wt.-%, more preferably 0.0005 to 0.5 wt.-%, based on the total weight of the polypropylene composition, of an alpha-nucleating agent, said alpha-nucleating agent being preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and 1,2-cyclohexane-dicarboxylic acid calcium salt, and mixtures thereof,

wherein the ethylene-propylene copolymer has

i) an ethylene content, measured by $^{13}$C-NMR, in the range of 0.5 to 7.0 wt.-%,
ii) 2,1 erythro regio-defects, measured by $^{13}$C NMR, in the range of > 0.10 to 1.00 mol-%, and
iii) a $MFR_2$ (230°C; 2.16 kg), measured according to ISO 1133, in the range of 0.1 to 5.0 g/lOmin.

Even more preferred the present invention is directed to a blown film consisting of a polypropylene composition, said polypropylene composition consisting of

(a) at least 98.0 wt.-%, more preferably at least 99.0 wt.-%, based on the total weight of the composition, of the ethylene-propylene copolymer,
(b) 0.01 to 1.0 wt.-%, more preferably 0.05 to 0.8 wt.-%, based on the total weight of the polypropylene composition, of a polymer processing aid, wherein said polymer processing aid is a polyethylene-polyethylene glycol block copolymer (PE-EO) represented by the following chemical formula $C_nH_{2n+z}(OCH_2CH_2)_yOH$, wherein n is on average ≥ 5, preferably n is on average from 5 to 100, more preferably on average from 10 to 50, z is from -3 to 1, preferably is 1, y is on average ≥ 25, preferably y is on average from 25 to 500, more preferably is on average from 50 to 250,
(c) 0.0001 to 1.0 wt.-%, more preferably 0.0005 to 0.5 wt.-%, based on the total weight of the polypropylene composition, of an alpha-nucleating agent, said alpha-nucleating agent being preferably selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and 1,2-cyclohexane-dicarboxylic acid, calcium salt, and mixtures thereof, and
(d) 0.05 to 1.0 wt.-%, based on the total weight of the polypropylene composition, of additives,

wherein the ethylene-propylene copolymer has

i) an ethylene content, measured by $^{13}$C-NMR, in the range of 0.5 to 7.0 wt.-%,
ii) 2,1 erythro regio-defects, measured by $^{13}$C NMR, in the range of > 0.10 to 1.00 mol-%, and
iii) a $MFR_2$ (230°C; 2.16 kg), measured according to ISO 1133, in the range of 0.1 to 5.0 g/10min, and

wherein still further the combined amount of (b), (c) and (d), based on the total weight of the composition, does not exceed 2.0 wt.-%, preferably does not exceed 1.0 wt.-%.

In the following the invention is described by way of examples.

**A. Measuring methods**

The following definitions of terms and determination methods apply for the above general description of the invention including the claims as well as to the below examples unless otherwise defined.

**Quantification of microstructure by NMR spectroscopy**

Quantitative nuclear-magnetic resonance (NMR) spectroscopy was used to quantify the isotacticity and regio-regularity of the ethylene-propylene copolymer. Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in *1,2*-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}$C{$^1$H} NMR spectra were processed, integrated and relevant quantitative properties determined from the integrals using proprietary computer programs.

All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions

of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ \text{mol-\%} = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [\text{mol-\%}] = 100 * f_E$$

The weight percent comonomer incorporation was calculated from the mole fraction:

$$E\ [wt.-\%] = 100 * (f_E * 28.06) / ((f_E * 28.06) + ((1-f_E) * 42.08))$$

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of the polypropylene is determined at a temperature of 230 °C and a load of 2.16 kg.

**Calculation** of melt flow rate $MFR_2$ (230 °C) of the second polypropylene (PP2):

$$MFR(PP2) = 10^{\left[\frac{\log(MFR(PP)) - w(PP1)\ x\ \log(MFR(PP1))}{w(PP2)}\right]}$$

wherein

w(PP 1) is the weight fraction [in wt.-%] of the first ethylene-propylene copolymer fraction (F1) ,
w(PP2) is the weight fraction [in wt.-%] of the second ethylene-propylene copolymer fraction (F2) ,
MFR(PP1) is the melt flow rate $MFR_2$ (230 °C) [in g/10min] the first ethylene-propylene copolymer fraction (F1),
MFR(PP) is the melt flow rate $MFR_2$ (230 °C) [in g/10min] of the reactor powder of the ethylene-propylene copolymer,
MFR(PP2) is the calculated melt flow rate $MFR_2$ (230 °C) [in g/10min] of the second ethylene-propylene copolymer fraction (F2).

**Molar mass (ethylene-propylene copolymer)**

Molar mass averages (Mz, Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i\ x\ M_i)}{\sum A_i}$$

$$M_z = \frac{\sum_{i=1}^{N} (A_i\ x\ M_i^2)}{\sum (A_i / M_i)}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 µL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99.

All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**Molar mass (polyethylene-polyethylene glycol block copolymer):**

The molar mass averages (Mz, Mw and Mn) and the molecular mass distribution of the polyethylene-polyethylene glycol block copolymers was determined by gel permeation chromatography (GPC) in chloroform ($CHCl_3$) at 23 °C.

**The xylene soluble fraction at room temperature (XCS, wt.-%):**

The amount of the polymer soluble in xylene was determined at 25 °C according to ISO 16152; 5th edition; 2005-07-01.

**DSC analysis, melting peak temperature ($T_{p,m}$) and melting enthalpy ($H_m$), crystallization peak temperature ($T_{p,C}$) and crystallization enthalpy ($H_c$): measured with a TA Instrument** Q200 differential scanning calorimetry (DSC) on 5 to 7 mg samples. DSC was run according to ISO 11357 / part 3 /method C2 in a heat / cool / heat cycle with a scan rate of 10 °C/min in the temperature range of -30 to +225°C. Crystallization peak temperature ($T_{p,c}$) and crystallization enthalpy ($H_c$) were determined from the cooling step, while the melting peak temperature ($T_{p1,m}$) and the melting peak temperature ($T_{p2,m}$) and the melting enthalpy ($H_{m1/2}$) were determined from the second heating step.

**Haze**

Haze was determined according to ASTM D 1003-00 on the film as described below.

**Clarity**

Clarity was determined according to ASTM D1003:21 on the film as described below.

**B. Preparation of polymer composition**

Catalyst for the inventive examples

***Catalyst complex***

The following metallocene complex has been used as described in WO 2019/179959:

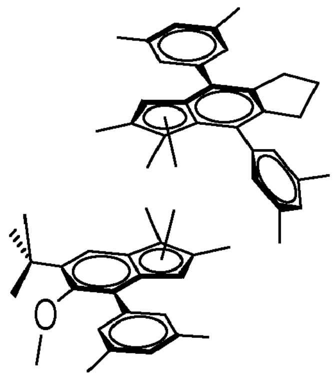

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system 1 (SSCS1) preparation***

30 wt.-% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring.

Dried catalyst was sampled in the form of pink free flowing powder containing 13.9% Al and 0.11% Zr.

**Table 1: Polymerization conditions**

| **Polymer** | | Poly 1 |
|---|---|---|
| Catalyst | | SSCS1 |
| **Prepoly reactor** | | |
| Temp. | [°C] | 20 |
| Press. | [barg] | 53.1 |
| Residence time | [h] | 0.4 |
| **Loop reactor** | | |
| Temp. | [°C] | 70 |
| Press. | [barg] | 53.1 |
| Feed H2/C3 ratio | [mol/kmol] | 0.19 |
| Feed C2/C3 ratio | [mol/kmol] | 4.73 |
| Polymer Split* | [wt.-%] | 58 |
| $MFR_2$* | [g/10 min] | 3.1 |
| Total C2* | [wt.-%] | 0.3 |
| Total C2* | [mol-%] | 0.45 |
| XCS* | [wt.-%] | 0.45 |
| **GPR (F2)** | | |
| Temp. | [°C] | 80 |
| Press. | [barg] | 24.98 |
| H2/C3 ratio | [mol/kmol] | 0.65 |
| C2/C3 ratio | [mol/kmol] | 64.0 |
| Polymer Split | [wt.-%] | 42 |
| C2** | [wt.-%] | 2.9 |
| C2** | [mol-%] | 4.3 |
| $MFR_2$*** | [g/10 min] | 0.65 |
| **Final Powder** | | |
| $MFR_2$ | [g/10 min] | 1.74 |
| MWD | [-] | 2.9 |
| Total C2 | [wt.-%] | 1.4 |
| Total C2 | [mol-%] | 2.1 |
| 2,1 erythro | [mol-%] | 0.58 |

(continued)

| **Final Powder** | | |
|---|---|---|
| XCS | [wt.-%] | 0.70 |

* "$MFR_2$", "Total C2", "XCS" and "Polymer Split" are measured in the loop reactor, i.e. is the combination of Prepoly Reactor and Loop reactor and considered as the first propylene copolymer fraction (F1)
** "C2" is calculated from the "Total C2" measured in the loop reactor and "Total C2" measured from the powder
*** "$MFR_2$" is calculated from the $MFR_2$ measured in the loop reactor and the $MFR_2$ of the powder using the formula given above defining the measurement of $MFR_2$

The ethylene-propylene copolymer was compounded in a ZSK 57 twin screw extruder, with a melt temperature of 210°C, together with different additives mentioned in table 2 to obtain the polypropylene compositions of examples CE1; CE2 and IE1.

**Table 2: Polymer composition and blown film properties**

| Polymer composition | | CE1 | CE2 | IE1 |
|---|---|---|---|---|
| Poly1 | [wt.-%] | 99.7 | 99.5 | 99.5 |
| AO1 | [wt.-%] | 0.1 | 0.1 | 0.1 |
| SHT | [wt.-%] | 0.05 | 0.05 | 0.05 |
| NA | [wt.-%] | 0.1 | 0.1 | 0.1 |
| Brij® S20 | [wt.-%] | - | 0.2 | - |
| Brij® S100 | [wt.-%] | - | - | 0.2 |
| $MFR_2$ | [g/10min] | 1.8 | 1.9 | 1.8 |
| $T_{p,c}$ | [°C] | 119 | 120 | 121 |
| $T_{p1,m}$ | [°C] | 149 | 151 | 150 |
| $T_{p2,m}$ | [°C] | 138 | 138 | 137 |
| Blown film properties | | | | |
| Film surface | | Melt fracture | Melt fracture | No melt fracture |
| Haze | % | 8.3 | 9.7 | 4.4 |
| Clarity | % | 73.6 | 72.2 | 90.8 |

"AO1" is a mixture of the sterically hindered phenol pentaerythrityl-tetrakis(3-(3',5'-di-tert. butyl-4-hydroxyphenyl)-propionate (CAS-no. 6683-19-8, commercially available as Irganox 1010 from BASF SE, Germany) and the phosphorous based antioxidant tris (2,4-di-t-butylphenyl) phosphite (CAS-no. 31570-04-4, commercially available as Irgafos 168 from BASF SE, Germany) in the weight ratio of 1:2; "SHT" is the acid scavenger Hycite 713 of BASF SE, Germany, a magnesium/aluminium-hydrotalcite (CAS-no. 11097-59-9);

"NA" is the commercial alpha-nucleating agent ADK STAB NA-71 of Adeka Corporation, Japan, a mixture comprising 2,2'-Methylenebis(2,6-di-tert-butylphenyl)phosphate lithium salt (CAS-no. 85209-93-4);

"Brij® 20" is a polyethylene-polyethylene glycol block copolymer (CAS-no. 9005-00-9) commercially available from Sigma-Aldrich, having the linear Formula $C_{18}H_{37}(OCH_2CH_2)_yOH$ with y being on average 20, and a number average molecular weight $M_n$ of 1,150 g/mol.

"Brij® 100" is a polyethylene-polyethylene glycol block copolymer (CAS-no. 9005-00-9) commercially available from Sigma-Aldrich, having the linear Formula $C_{18}H_{37}(OCH_2CH_2)_yOH$, with y being on average 100, and a number average molecular weight $M_n$ of 4,670 g/mol.

The blown films were produced on a Windmöller & Hölscher (W&H) semi-commercial blown film line, with blow-up ratio of 1:2.5 and film thickness of 50 $\mu$m. The melt temperature was fixed at 220°C and the uptake speed was 14m/min. The surface quality of the films were observed by man skilled in the art.

As seen in Table 2, the polyethylene-polyethylene glycol block copolymer having a longer polyethylene glycol

block (IE1, n~100) improves the haze (lower) and clarity (higher) of the obtained film compared to films without a polyethylene-polyethylene glycol block copolymer (CE1) or with a polyethylene-polyethylene glycol block copolymer having a shorter polyethylene glycol block (CE2, n~20). Further, while CE1 and CE2 have clear visible melt fracture, IE1 has a glossy and smooth surface without visible melt fracture.

## Claims

1. Blown film comprising a polypropylene composition comprising

   a) at least 98.0 wt.-% of an ethylene-propylene copolymer, based on the total weight of the polypropylene composition, and
   b) 0.01 to 1.0 wt.-% of a polymer processing aid, based on the total weight of the polypropylene composition, wherein said polymer processing aid is a polyethylene-polyethylene glycol block copolymer (PE-EO) represented by the following chemical formula $C_nH_{2n+z}(OCH_2CH_2)_yOH$, wherein n is on average ≥ 5, preferably n is on average from 5 to 100, more preferably on average from 10 to 50, z is from -3 to 1, preferably is 1, y is on average ≥ 25, preferably y is on average from 25 to 500, more preferably is on average from 50 to 250,

   wherein the ethylene-propylene copolymer has

   i) an ethylene content, measured by $^{13}C$-NMR, in the range of 0.5 to 7.0 wt.-%,
   ii) 2,1 erythro regio-defects, measured by $^{13}C$ NMR, in the range of >0.10 to 1.00 mol-%, and
   iii) a $MFR_2$ (230°C; 2.16 kg), measured according to ISO 1133, in the range of 0.1 to 5.0 g/lOmin.

2. The blown film according to any of the preceding claims, wherein, wherein the PE-EO block copolymer has a number average molar mass (Mn), determined by GPC, in the range of 2,000 to 25,000 g/mol, preferably 3,000 to 20,000 g/mol.

3. The blown film according to any of the preceding claims, wherein the polypropylene composition does not contain fluoropolymers, preferably contains solely the PE-EO block copolymer as the polymer processing aid.

4. The blown film according to any of claims 1 to 4, wherein the polypropylene composition

   - has a $MFR_2$ (230°C; 2.16 kg), measured according to ISO 1133, in the range of 0.1 to 5.0 g/lOmin; and
   - optionally has a melting temperature Tm, determined according to ISO 11357-3, in the range of 125 to 162 °C.

5. The blown film according to any one of the preceding claims, wherein the ethylene-propylene copolymer

   - has a molecular weight distribution (MWD) determined by Gel Permeation Chromatography (GPC) in the range of 2.0 to 5.0, and
   - optionally has a xylene cold soluble (XCS) fraction, determined at 25 °C according to ISO 16152, in the range of 0.2 to 3.0 wt.-%.

6. The blown film according to any one of the preceding claims, wherein the film has a haze, as determined according to ASTM D 1003-00, of ≤ 8%, preferably ≤ 7%, more preferably in the range of 0.1% to 6.0 %.

7. The blown film according to any one of the preceding claims, wherein the film has a clarity, as determined according to ASTMD1003:21 of ≥ 80%, preferably ≥ 85%, more preferably in the range of 85% to 99%.

8. The blown film according to any one of the preceding claims, wherein the polypropylene composition comprises additionally an alpha-nucleating agent in the range of 0.0001 to 1.0 wt.-%, based on the total amount of the polypropylene composition.

9. The blown film according to claim 8, wherein the alpha-nucleating agent is selected from the group consisting of hydroxy-bis[2,4,8,10-tetrakis(1,1-dimethylethyl)-6-hydroxy-12H-dibenzo-[d,g]-dioxa-phoshocin-6-oxidato] aluminium, poly vinylcyclohexane (p-VCH), 2,2'- methylene bis-(2,6-di-tert. butylphenyl) phosphate lithium salt, and 1,2-cyclohexane-dicarboxylic acid, calcium salt, and mixtures thereof.

**10.** The blown film according to any one of the preceding claims, wherein the polypropylene composition has at least one melting peak temperature ($T_{p,m}$), determined according to ISO 11357-3, in the range of 132 to 150 °C, preferably has at least two melting peak temperatures, whereby one melting peak temperature ($T_{p1,m}$) is in the range of 145 to 155 °C and another melting peak temperature ($T_{p2,m}$) is in the range of 134 to 142 °C.

**11.** The blown film according to any one of the preceding claims, wherein the ethylene-propylene copolymer comprises, preferably consists of,

(a) a first ethylene-propylene copolymer fraction (F1) having an ethylene content, measured by $^{13}$C-NMR, in the range of 0.2 to 1.0 wt-%, and
(b) a second ethylene-propylene copolymer fraction (F2),

wherein

- the amount of ethylene in the first ethylene-propylene copolymer fraction (F1) and second ethylene-propylene copolymer fraction (F2) is different, with the proviso that the ethylene content in the first ethylene-propylene copolymer fraction (F1) is lower than in the second ethylene-propylene copolymer fraction (F2),
- the weight ratio between the first ethylene-propylene copolymer fraction (F1) and the second ethylene-propylene copolymer fraction (F2) [(F1)/(F2)] is in the range of 70/30 to 50/50, and
- the total amount of the first ethylene-propylene copolymer fraction (F1) and the second ethylene-propylene copolymer fraction (F2) together, based on the ethylene-propylene copolymer, is at least 98 wt.-%, preferably the ethylene-propylene copolymer consists of the first propylene ethylene-copolymer fraction (F1) and the second ethylene-propylene copolymer fraction (F2).

**12.** Blown film according to claim 11, wherein the ethylene-propylene copolymer complies with the equation (1)

$$\frac{C2\ (PPC)}{C2(F1)x[\frac{(F1)}{(PPC)}]} > 3.00$$

wherein "C2 (PPC)" is the ethylene content [wt.-%], measured by $^{13}$C NMR, of the ethylene-propylene copolymer;
"C2 (F1)" is the ethylene content [wt.-%], measured by $^{13}$C NMR, of the first ethylene-propylene copolymer fraction (F1);
"(F1)/(PPC)" is the amount of the first propylene ethylene-copolymer fraction (F1) in the ethylene-propylene copolymer divided by the amount of the ethylene-propylene copolymer.

**13.** Blown film according to claim 11 or 12, wherein the ethylene content between the first ethylene-propylene copolymer fraction (F1) and the second ethylene-propylene copolymer fraction (F2) differs in the range of 2.0 to 6.0 wt.-%.

**14.** Use of the polypropylene composition as defined in any one of the preceding claims 1 to 5, or 8 to 13 for the manufacture of a blown film.

**15.** Process for obtaining a blown film comprising the following steps

I. providing a polypropylene composition according to any of claims 1 to 5, or 8 to 13,
II. melting the polypropylene composition
III. inflating the molten polypropylene composition into a thin film bubble
IV. air cooling the thin film bubble
V. collapsing the thin film bubble, thereby obtaining a blown film.

Europäisches Patentamt
European Patent Office
Office européen des brevets

# EUROPEAN SEARCH REPORT

Application Number
EP 23 16 9115

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 967 716 A1 (BOREALIS AG [AT]) 16 March 2022 (2022-03-16) * claims; examples * | 1-15 | INV. C08J5/18 C08K5/10 C08L23/16 C08L71/02 B29C48/10 |
| Y<br>A | EP 3 960 797 A1 (BOREALIS AG [AT]) 2 March 2022 (2022-03-02) * paragraphs [0020], [0084]; claims; table 1 * | 1-10,14, 15<br>11-13 | |
| Y<br>A | US 2023/024578 A1 (RUOCCO NINO [US] ET AL) 26 January 2023 (2023-01-26) * paragraph [0081]; claims * | 1-10,14, 15<br>11-13 | |
| Y<br>A | DE 601 12 565 T2 (MITSUI CHEMICALS INC [JP]) 29 June 2006 (2006-06-29) * claims; example 80 * | 1-10,14, 15<br>11-13 | |

TECHNICAL FIELDS SEARCHED (IPC)

C08J
C09J
C08K
C08L
B29C

The present search report has been drawn up for all claims

| Place of search | Date of completion of the search | Examiner |
|---|---|---|
| Munich | 19 September 2023 | Frison, Céline |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 16 9115

This annex lists the patent family members relating to the patent documents cited in the above-mentioned European search report. The members are as contained in the European Patent Office EDP file on
The European Patent Office is in no way liable for these particulars which are merely given for the purpose of information.

19-09-2023

| Patent document cited in search report | Publication date | Patent family member(s) | Publication date |
|---|---|---|---|
| EP 3967716 A1 | 16-03-2022 | BR 112023003480 A2 | 11-04-2023 |
| | | CN 116075544 A | 05-05-2023 |
| | | EP 3967716 A1 | 16-03-2022 |
| | | WO 2022053475 A1 | 17-03-2022 |
| EP 3960797 A1 | 02-03-2022 | BR 112023002569 A2 | 14-03-2023 |
| | | CN 116134059 A | 16-05-2023 |
| | | EP 3960797 A1 | 02-03-2022 |
| | | US 2023257567 A1 | 17-08-2023 |
| | | WO 2022043385 A1 | 03-03-2022 |
| US 2023024578 A1 | 26-01-2023 | US 2023024578 A1 | 26-01-2023 |
| | | US 2023031000 A1 | 02-02-2023 |
| | | US 2023036922 A1 | 02-02-2023 |
| | | WO 2023056207 A1 | 06-04-2023 |
| | | WO 2023056208 A1 | 06-04-2023 |
| | | WO 2023056210 A2 | 06-04-2023 |
| | | WO 2023056212 A1 | 06-04-2023 |
| | | WO 2023056213 A1 | 06-04-2023 |
| | | WO 2023056214 A1 | 06-04-2023 |
| DE 60112565 T2 | 29-06-2006 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20050070644 A1
- EP 3234004 B1
- WO 2019179959 A
- EP 0887379 A
- WO 9212182 A
- WO 2004000899 A
- WO 2004111095 A
- WO 9924478 A
- WO 9924479 A
- WO 0068315 A
- WO 2015082379 A
- WO 2015011134 A
- US 4582816 A
- US 3405109 A
- US 3324093 A
- EP 479186 A
- US 5391654 A
- EP 887379 A
- EP 887380 A
- EP 887381 A
- EP 991684 A


### Non-patent literature cited in the description


- **NELLO PASQUINI.** Polypropylene Handbook. 412-414
- **J. MILTON HARRIS et al.** Purification of biomaterials by phase-partitioning with poly(ethylene glycol)-alkyl ether. *Ind. Eng. Chem. Prod. Res. Dev.,* 1984, vol. 23 (1), 86-88
- **M. H. M. AHMED et al.** Preparation and characterization of some new surfactant derived from phenol. *Olaj, Szappan, Kozmetika,* 2011, vol. 60 (1), 17-22
- **HANS ZWEIFEL.** Plastics Additives Handbook. 967-990
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- *CHEMICAL ABSTRACTS,* 6683-19-8
- *CHEMICAL ABSTRACTS,* 31570-04-4
- *CHEMICAL ABSTRACTS,* 11097-59-9
- *CHEMICAL ABSTRACTS,* 85209-93-4
- *CHEMICAL ABSTRACTS,* 9005-00-9